# EUROPÄISCHE PATENTANMELDUNG

(11) **EP 0 863 068 A2**
(43) Veröffentlichungstag der Anmeldung: **09.09.1998**
(21) Anmeldenummer: 98103201.4
(22) Anmeldetag: 24.02.1998
(51) Int. Cl.: B62L 1/14

(54) **Felgenbremse**

(30) Priorität: 07.03.1997 DE 19709372
(71) Anmelder: Schmidt, Herbert, 33790 Halle (DE)
(72) Erfinder: Schmidt, Herbert, 33790 Halle (DE)
(74) Vertreter: Stracke, Alexander, Dipl.-Ing.

(57) **Zusammenfassung**

Eine Felgenbremse für ein Fahrrad, mit zwei sich gegenüberliegenden, an eine Felge (3) anpreßbaren Bremsklötzen (6), die an jeweils einem seilzugbetätigbaren Hebelarm (1) befestigt sind, wobei diese an Rahmenteile (14), wie der Vorderradgabel angeschlossen sind, ist nach der Erfindung so gestaltet, daß die Hebelarme (1) unterhalb der jeweiligen Befestigung mit dem Rahmenteil (14) schwenkbar gelagert sind.

## Beschreibung

Die vorliegende Erfindung betrifft eine Felgenbremse gemäß dem Oberbegriff des Anspruches 1.

Derartige Felgenbremsen, die auch unter dem Begriff "Cantilever-Bremsen" bekannt sind, sind seit langem bekannt. Ein Charakteristikum ist dabei die unveränderbare Befestigung an Rahmenteilen.

Allerdings weisen diese Felgenbremsen neben den unbestreitbar vorhandenen Vorteilen erhebliche Nachteile auf. Hierzu zählt beispielsweise, daß die Bremswirkung nur durch eine sehr stark vom Geschick des Monteurs abhängige Einstellung erreichbar ist. Da dies tatsächlich nur in den seltensten Fällen möglich ist, ist davon auszugehen, daß im Regelfall eine optimale Bremswirkung nicht erzielbar ist.

Darüber hinaus läßt die Bremswirkung mit einem Verschleiß der Bremsklötze nach, dem nur durch eine rechtzeitige Nachjustierung entgegengewirkt werden kann. Auch hier ergeben sich jedoch in der Praxis erhebliche Probleme, die vielfach dazu geführt haben, daß bei starkem Verschleiß der Bremsklötze diese über den Felgenrand in die Radspeichen einklappten, so daß es hierdurch zu schweren Unfällen kam. Diese Gefährdung ist nur möglich, weil konstruktuktionsbedingt der Einschwenkwinkel der Bremsklötze aufgrund des festgelegten Drehpunktes sehr groß ist.

Aus der FR 945 003 und der FR 945 420 sind Felgenbremsen bekannt, die sehr aufwendig und kompliziert aufgebaut sind. Dies führt zum einen zu hohen Herstellungskosten und zum anderen zu einer Einschränkung der Funktion. Dies vor allem deshalb, weil aufgrund der auftretenden Reibungsverluste der vielen zueinander beweglichen Teile ein geringer Wirkungsgrad erzielbar ist. Überdies führt der komplizierte Aufbau dieser Felgenbremsen zu einer erhöhten Störanfälligkeit mit einer infolge daraus verminderten Betriebssicherheit.

Aus der FR 456 893 ist ebenfalls eine Felgenbremse bekannt, die jedoch keinen rahmenfesten Befestigungspunkt aufweist. Eine Einstellung der Felgengremse, wie sie für einen optimalen Einsatz erforderlich ist, kann daher nur rein zufällig sein und bedarf mit Sicherheit erheblicher fachlicher Kenntnisse und handwerklichen Geschicks. Überdies ist diese Felgenbremse nicht universell einsetzbar, da es unterschiedlichste Durchmesser und Querschnittsformen von Gabelrohren gibt, an denen diese Felgenbremse zu befestigen ist. Ein Nachrüsten von Fahrrädern ist daher nur sehr eingeschränkt möglich.

Bei einer aus der US 5 103 938 bekannten Felgenbremse ist der Dreh- bzw. Befestigungspunkt des Hebelarmes nach innen, also in Richtung des Rades verlegt, um so durch die Veränderung der Hebelverhältnisse eine bessere Bremsleistung zu erzielen. Dies ist jedoch insofern nachteilig, als die Felgenbremse sehr genau eingestellt werden muß, die Felge außerdem keinen Seitenschlag aufweisen darf und die Bremse schon bei einem geringen Belagverschleiß nachgestellt werden muß. Bei starkem Belagverschleiß, wie er insbesondere bei Benutzung des Fahrrades im Gelände bei Feuchtigkeit und Schmutz auftritt, kann diese Felgenbremse zu einem totalen Bremsversagen führen, da zwischen dem Handbremshebel und dem Lenker nur ein begrenzter Freiraum zur Verfügung steht. Dabei würde der Handbremshebel am Lenkerrohr anliegen, um eine Bremswirkung zu erzielen. Hinzu kommt noch, daß sich bei dieser Anordnung das Seildreieck bei Belagverschleiß noch stärker verändert als bei einer herkömmlichen, bekannten Cantilever-Bremse. Des weiteren ist eine aufwendige Technik erforderlich, um das Laufrad ein- und ausbauen zu können.

Die bereits eingangs geschilderten Nachteile beim Einsatz einer "Cantilever-Bremse" treffen gleichermaßen auf eine aus der DE 296 19 926 U1 bekannt gewordenen Felgenbremse zu.

Der vorliegenden Erfindung liegt daher die Aufgabe zugrunde, eine Felgenbremse der gattungsgemäßen Art so zu gestalten, daß mit konstruktiv einfachsten Mitteln die Bremswirkung zuverlässiger und sicherer erreicht und die Betriebssicherheit erhöht wird.

Diese Aufgabe wird durch eine Felgenbremse gelöst, die die Merkmale des Anspruches 1 aufweist.

Durch diese konstruktive Ausgestaltung einer Felgenbremse wird die Umsetzung der eingeleiteten Bremskraft wesentlich verbessert, so daß sich eine gute Bremsleistung bei allen Witterungsbedingungen, also auch bei Nässe ergibt.

Dadurch, daß der Drehpunkt der Hebelarme gegenüber der Befestigung verlegt ist, ergibt sich ein günstigeres Hebelverhältnis, durch das ein Einklappen der Bremsklötze bei einem Verschleiß bis in den Speichenbereich praktisch ausgeschlossen ist. Eine wesentliche Erhöhung der Betriebssicherheit ist hierdurch gegeben.

Ein weiterer Vorteil der Erfindung liegt darin, daß wesentliche Teile der neuen Felgenbremse durch Stanzen preiswert hergestellt werden können.

Nach einem vorteilhaften Gedanken der Erfindung ist vorgesehen, daß jeder Hebelarm drehbar an einem Adapterteil befestigt ist, das fest mit dem Rahmenteil, beispielsweise der Vorderradgabel verbunden ist.

Dabei kann das Drehgelenk so gestaltet sein, daß dessen Lagerspiel exakt einzustellen ist, so daß eine verschleißbedingt notwendige Nachstellung ohne Aufwand möglich ist.

Weiter ist an den Hebelarmen jeweils eine Rückholfeder angeschlossen, mit der die Bremsklötze in einer Freistellung gehalten werden. Dabei sind beide Rückholfedern jeweils für sich stufenlos verstellbar.

Zweckmäßig ist es, die Rückstellkraft ohne Werkzeuge zu verstellen, so daß eine entsprechende Einstellung z.B. während einer Radtour problemlos erfolgen kann.

Eine Justierung der Bremsklötze selbst erfolgt nach einer weiteren vorteilhaften Ausgestaltung der Erfindung über ein Dreh-Kippgelenk. Hierdurch wird eine präzise Einstellung ebenso möglich, wie eine verschleißbedingte Nachstellung, ohne dabei die Winkelstellung der Bremsklötze zu verändern.

Ein weiterer wesentlicher Vorteil der Erfindung liegt darin, daß die bislang mit gattungsgemäßen Felgenbremsen ausgerüsteten Fahrräder ohne weiteres mit der neuen Felgenbremse ausgerüstet werden können, da die Lage der Befestigung der Hebelarme unverändert bleibt, nur daß jetzt eine Trennung zwischen dem Befestigungspunkt und dem Drehpunkt gegeben ist.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
Figur 1 ein Ausführungsbeispiel einer erfindungsgemäßen Felgenbremse in einer Vorderansicht,
Figur 2 eine Draufsicht auf die Felgenbremse,
Figur 3 ein weiteres Ausführungsbeispiels einer Felgenbremse in einer Vorderansicht,
Figur 4 die Felgenbremse nach der Fig. 3 in einer Draufsicht,
Figur 5 einen Schnitt durch einen Teil der Felgenbremse gemäß der Linie V-V in Fig. 3,
Figur 6 einen Schnitt durch einen Teil der Felgenbremse gemäß der Linie VI-VI in Fig. 4.

Soweit sie gleiche Bauteile betreffen, wurden gleiche Bezugszeichen für beide gezeigten Ausführungsbeispiele verwendet.

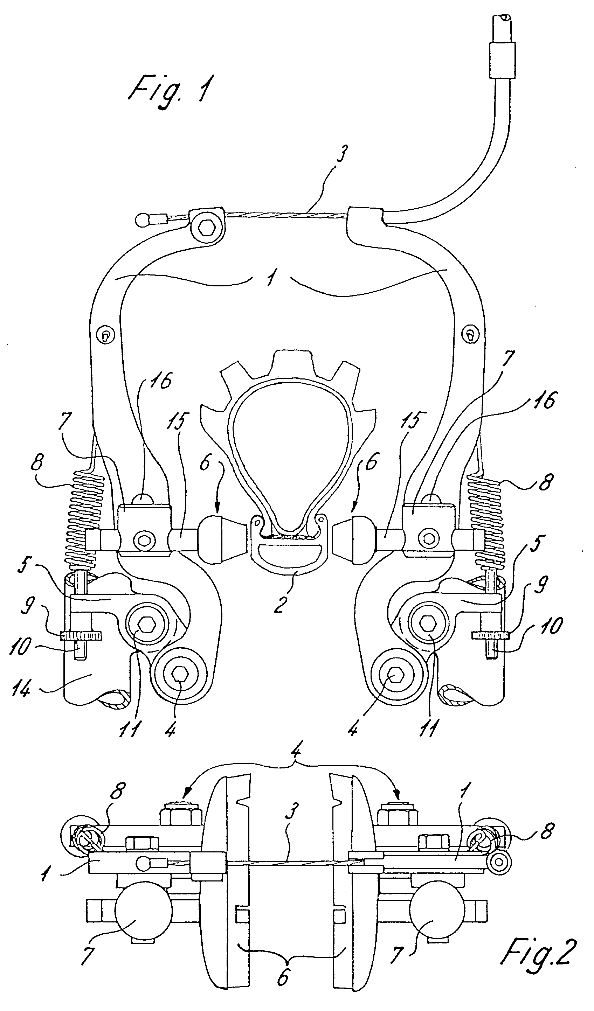

In den Figuren 1 und 2 ist eine Felgenbremse dargestellt, die zwei sich gegenüberliegende Hebelarme 1 aufweist. Am oberen Ende der Hebelarme 1 ist ein Seilzug 3 befestigt, bei dessen Betätigung die Hebelarme 1 zueinander bewegt werden, wodurch angeschlossene Bremsklötze 6 gegen eine Felge 2 gepreßt werden.

Die Bremsklötze 6 sind in Bremsklotzhaltern 7 befestigt.

Unterhalb dieser Bremsklotzhalter, an den dem Seilzug 3 abgewandten anderen freien Ende der Hebelarme 1 ist jeweils ein Adapterteil 5 angeschlossen, das fest mit einem Rahmenteil 14, beispielsweise einer Vorderradgabel eines Fahrrades verbunden ist. Hierzu ist eine Befestigungsschraube 11 vorgesehen.

Das Adapterteil 5 ist nach unten hin gekröpft und bildet dort ein Drehlager 4, an dem der Hebelarm 1 schwenkbar befestigt ist.

Die Befestigungsschraube 11 befindet sich also zwischen dem Bremsklotzhalter 7 bzw. dem Bremsklotz 6 und dem Drehlager 4.

Durch Rückstellfedern 8, die einerseits an den Hebelarmen 1 und andererseits an den Adapterteilen 5 befestigt sind, werden die Hebelarme 1 und damit die Bremsklötze 6 in eine Freistellung gegenüber der Felge 2 gezogen. Dabei sind in dem Ausführungsbeispiel nach den Fig. 1 und 2 die Rückstellfedern 8 an Schrauben 10 befestigt, auf die Rändelmuttern 9, die sich an den Adapterteilen 5 abstützen, aufgeschraubt. Hierdurch ist die Rückstellkraft der Rückholfedern 8, je nach Bedarf, unterschiedlich einstellbar. So ist beispielsweise bei schlechtem Wetter und starker Verschmutzung eine höhere Rückstellkraft erforderlich als bei trockenem Wetter und guten Wegverhältnissen.

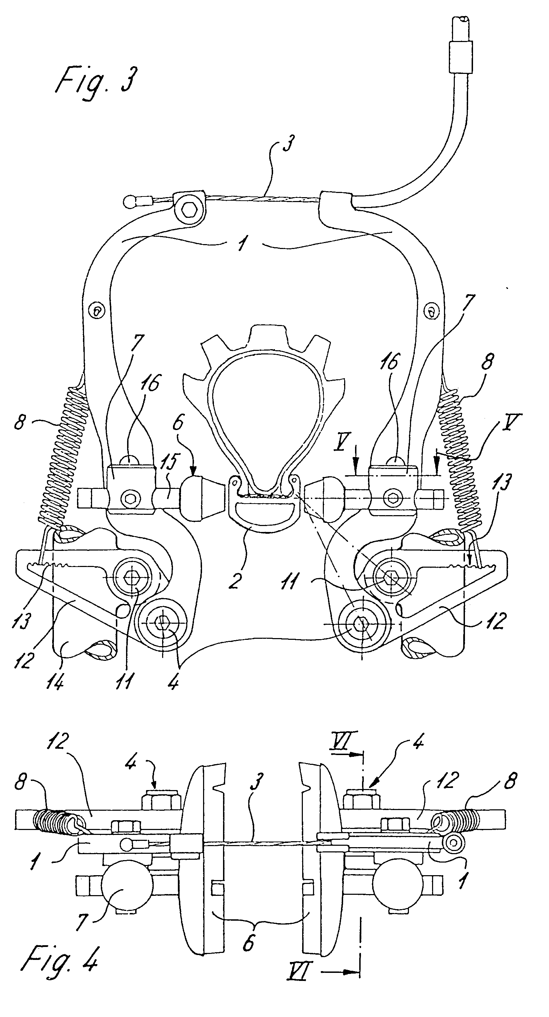

Bei dem in den Fig. 3 und 4 gezeigten Ausführungsbeispiel in einer Felgenbremse, die ansonsten baugleich ist mit der in den Fig. 1 und 2 dargestellten, sind die Rückstellfedern 8 in Adapterteile 12 eingehängt, die jeweils eine Verzahnung 13 aufweisen, in die die Rückstellfedern 8 so eingelegt werden können, daß eine je nachdem unterschiedliche Rückstellkraft wirksam wird.

In beiden gezeigten Beispielen ist eine Verstellung der Rückstellfedern und damit eine Anpassung an die jeweiligen Gegebenheiten ohne Werkzeug möglich, was naturgemäß eine Vereinfachung der Handhabung darstellt.

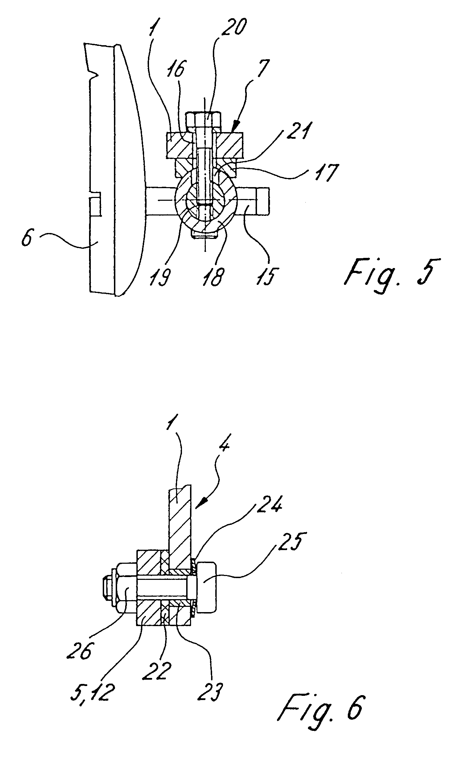

Die Fig. 5 zeigt die Bremsklotzhalterung 7, die in ihrem Grundaufgrund aus einer Hülse 18 besteht, in der drehbar ein Dorn 19 gelagert ist. In diesen Dorn 19 ist eine Schraube 20 eingedreht, die mit ihrem Kopf an dem Hebelarm 1 anliegt, wobei der Schraubenschaft ein Langloch 15 des Hebelarmes 1 sowie eine Bohrung 21 der Hülse 18 durchtritt. Das Langloch 16 erstreckt sich dabei in vertikaler Richtung. Zwischen dem Hebelarm 1 und der Hülse 18 ist eine Schwenkscheibe 17 angeordnet, die eine der Krümmung der Hülse 18 angepaßte Auflagefläche aufweist.

Durch die gegenüber dem Schaftdurchmesser der Schraube 20 größeren Abmaße sowohl des Langloches 16 in seiner Breite als auch in der Bohrung 21 in ihrem Durchmesser ist eine exakte Anpassung des Bremsklotzes 6 an die unterschiedlichen Gegebenheiten möglich. Der Bremsklotz 6 selbst ist mittels eines nicht dargestellten Gewindestiftes in der Hülse 18, die auch topfartig ausgebildet sein kann, festgeklemmt.

Die konstruktive Ausgestaltung des Drehlagers 4 ist in der Fig. 6 deutlich zu erkennen. Dabei besteht das Drehlager 4 im wesentlichen aus einer Schraube 25, die in einer Buchse, vorzugsweise aus Bronze oder einem ähnlichen Gleitlagermaterial gefertigt ist, geführt und durch eine Sicherungsmutter 26, die sich an den Adapterteil 5,12 abstützt, festgesetzt.

Zwischen dem Adapterteil 5,12 und dem Hebelarm 1 ist eine Scheibe 22 plaziert, die einen geringen Reibungskoeffizienten aufweist, beispielsweise eine Kunststoffscheibe.

Zwischen dem Kopf der Schraube 25 und dem Hebelarm 1, an dem der Kopf der Schraube 25 anliegt, ist eine Tellerfeder 24 angeordnet, die einen sicheren Halt bei gleichzeitig einwandfreie Schwenkbarkeit des Hebelarmes 1 ermöglicht.

Durch diese Maßnahmen sowie durch insgesamt weniger Bauteile sind nur geringe Reibverluste vorhanden, die neben einem gefühlvollen Bremsen auch die Funktionsfähigkeit der Felgenbremse verbessert.

### Bezugszeichenliste

- 1: Hebelarm
- 2: Felge
- 3: Seilzug
- 4: Drehlager
- 5: Adapterteil
- 6: Bremsklotz
- 7: Bremsklotzhalter
- 8: Rückstellfeder
- 9: Rändelmutter
- 10: Stellschraube
- 11: Befestigungsschraube
- 12: Adapterteil
- 13: Verzahnung
- 14: Rahmenteil
- 15: Verbindungsbolzen
- 16: Langloch
- 17: Schwenkscheibe
- 18: Hülse
- 19: Dorn
- 20: Schraube
- 21: Bohrung
- 22: Scheibe
- 23: Buchse
- 24: Tellerfeder
- 25: Schraube
- 26: Sicherungsmutter

## Patentansprüche

1. Felgenbremse für ein Fahrrad mit zwei sich gegenüberliegenden, an eine Felge (2) anpreßbaren Bremsklötzen (6), die an jeweils einem, mittels eines seitlich angreifenden Seilzuges (3) oder hydraulisch betätigbaren Hebelarm (1) befestigt sind, wobei die Hebelarme (1) an unverrückbar an Rahmenteilen (14), wie der Vorderradgabel, angeschlossenen Befestigungsteilen festgelegt sind, **dadurch gekennzeichnet,** daß die Hebelarme (1) unterhalb des jeweiligen Befestigungsteiles schwenkbar gelagert sind.

2. Felgenbremse nach Anspruch 1, dadurch gekennzeichnet, daß jeder Hebelarm (1) mit einem am Rahmenteil (14) angeschlossenen Adapterteil (5,12) drehbar verbunden ist, das fest an das Rahmenteil (14) angeschlossen ist.

3. Felgenbremse nach Anspruch 1 oder 2, dadurch gekennzeichnet, daß jeder Hebelarm (1) mit einer Rückstellfeder (8) versehen ist, die andererseits am Adapterteil (5,12) festgelegt ist.

4. Felgenbremse nach Anspruch 3, dadurch gekennzeichnet, daß jede Rückstellfeder (8) eine Stellschraube (10) aufweist, die durch das Adapterteil (5) geführt ist und an dieser mit einer Rändelschraube (9) in Achsrichtung verschiebbar gehalten ist.

5. Felgenbremse nach Anspruch 3, dadurch gekennzeichnet, daß jede Rückstellfeder (8) in eine Zahnvertiefung einer Verzahnung (13) eingreift, die in dem Adapterteil (12) vorgesehen ist.

6. Felgenbremse nach Anspruch 2, dadurch gekennzeichnet, daß jeder Hebelarm (1) mittels einer federbelasteten Schraube (25) an dem zugeordneten Adapterteil (5,12) gehalten ist, wobei zwischen dem Adapterteil (5,12) und dem Hebelarm (1) eine Scheibe (22) angeordnet ist, die aus einem Material mit einem geringen Reibungskoeffizienten besteht.

7. Felgenbremse nach Anspruch 1, dadurch gekennzeichnet, daß die Bremsklötze (6) in einer Bremsklotzhalterung (7) axial verschiebbar festgelegt sind und einen Verbindungsbolzen (15) aufweisen, der jeweils durch einen Gewindestift in einer Hülse (18), die mit dem Hebelarm (1) verbunden ist, gehalten wird.

8. Felgenbremse nach Anspruch 7, dadurch gekennzeichnet, daß in der Hülse (18) ein Dorn (19) drehbar gelagert ist, in den eine Schraube (20) eingedreht ist, die sich mit ihrem Kopf am Hebelarm (1) abstützt, wobei sie ein Langloch (16), das sich in vertikaler Richtung erstreckt und eine in der Hülse (18) vorgesehene Bohrung (21) durchtritt.

9. Felgenbremse nach Anspruch 8, dadurch gekennzeichnet, daß die Breite des Langloches (16) sowie der Durchmesser der Bohrung (21) größer sind als der Durchmesser des Schaftes der Schraube (20).

10. Felgenbremse nach einem der Ansprüche 1 bis 9, dadurch gekennzeichnet, daß zwischen dem Hebelarm (1) und der Hülse (18) eine Schwenkscheibe (17) vorgesehen ist, deren an der Hülse (18) anliegende Seite der Krümmung der Hülse (18) angepaßt ist.
